# EUROPEAN PATENT SPECIFICATION

(11) **EP 3 088 846 B1**
(45) Date of publication and mention of the grant of the patent: **11.09.2019**
(21) Application number: 15165214.6
(22) Date of filing: 27.04.2015
(51) Int. Cl.: G01D 4/00, H04L 12/10

(54) **ELECTRONIC APPARATUS AND METHOD**
ELEKTRONISCHE VORRICHTUNG UND VERFAHREN
APPAREIL ÉLECTRONIQUE ET PROCÉDÉ

(43) Date of publication of application: 02.11.2016
(73) Proprietor: Kabushiki Kaisha Toshiba, Tokyo 105-8001 (JP)
(72) Inventor: Tsuji, Tadashi, Tokyo 105-8001 (JP)
(74) Representative: Henkel, Breuer & Partner

(56) References cited:
- EP-A1- 2 456 084
- WO-A1-2009/067250
- US-A- 4 697 182
- US-A1- 2004 061 616
- US-A1- 2012 324 273
- US-B1- 6 665 620

## Description

Embodiments described herein relate generally to electronic apparatuses with a communication function driven by a commercial power source.

Such electronic apparatuses include a meter called a smart meter, for example, power, gas and water meters with a communication function. The smart meter transmits use of power, gas and water to servers of power, gas, water companies, respectively. Each server transmits a charge, etc., to the smart meter. The smart meter transmits power failure information such as an ID number of its own device to the server of the power company to inform the power company of the situation of a power failure in a service area. The smart meter, which does not include a battery and is driven by a commercial power source, cannot transmit the power failure information to the server during the power failure because a power source is not supplied. In order to cope with this situation, the smart meter includes a large-capacitance electric-double-layer capacitor called a super-capacitor. Accordingly, the smart meter charges the capacitor during operation by the commercial power source, and is operable with the power of the charged capacitor for a given period after the occurrence of the power failure, allowing the power failure information to be transmitted to the server during the period.

However, the power failure often occurs in a comparatively-wide area. When a number of smart meters in a power failure area simultaneously transmit the power failure information to the server, communication traffic increases and sometimes causes a communication error without establishing a connection to the server. When the communication error is caused, the smart meter retries to establish the connection a number of times, and the power of the charged capacitor may be exhausted before transmission is normally completed. Then, the server may not be informed of the power failure information. The smart meter is connected to a base station of a mobile phone using a mobile phone line, and further connected to the server through the Internet. However, the smart meter cannot be directly connected to the base station using the mobile phone line in a region with low radio field intensity of the mobile phone line. Thus, a multi-hop wireless communication network (also called mesh network) can be formed by smart meters, and the power failure information can go through (hops) other smart meters and be transmitted to a smart meter (gateway) which has high radio field intensity of the mobile phone line and can be connected to the base station through the mobile phone line. In such a case, when one smart meter is in power failure, a neighboring smart meter is likely to be also in power failure. A mesh network including a smart meter (gateway) being in power failure may be disconnected, and the power failure information may not reach the gateway.

This situation can occur not only in the smart meter but also in an electronic apparatus driven by the commercial power source in which an external apparatus needs to be informed of the power failure. Furthermore, this situation can occur in an electronic apparatus including a battery since an operating time by the battery is limited.

US 6 665 620 B1 disclose power meters and corresponding system for transmitting information regarding power failure.

US 2012 324 273 A1 discloses to establish a mesh network including information regarding divers power supplies to different nodes, so as to allow a communication to a node of a diverse power supply in case of a power failure.

Further background state of the art is disclosed in US 2004 061 616 A1.

Embodiments described herein aim to provide an electronic apparatus driven by a commercial power source, the electronic apparatus being configured to inform an external apparatus of a power failure even if it does not include an operation power source due to the power failure.

According to the present invention the above object is achieved by means of an electronic apparatus according to claim 1 and a method for controlling the electronic apparatus according to claim 10. The dependent claims are directed to different advantageous aspects of the invention.

A general architecture that implements the various features of the embodiments will now be described with reference to the drawings. The drawings and the associated descriptions are provided to illustrate the embodiments and not to limit the scope of the invention.
FIG. 1 is a block diagram showing an example of a whole network including a communication hub and a gateway which are electronic apparatuses according to an embodiment.
FIG. 2 is a circuit diagram showing an example of a circuit configuration of the communication hub/gateway according to the embodiment.
FIG. 3 is a signal waveform chart showing an example of power failure detection and power failure recovery detection of the communication hub/gateway according to the embodiment.
FIG. 4 is a flowchart showing an example of an operation of the communication hub according to the embodiment.
FIG. 5 is a flowchart showing an example of an operation of the communication hub/gateway according to the embodiment.
FIG. 6 is a flowchart showing an example of an operation of the gateway according to the embodiment.
FIG. 7 is a block diagram showing an example of a whole network including a modified embodiment according to the electronic apparatus.

Various embodiments will be described hereinafter with reference to the accompanying drawings.

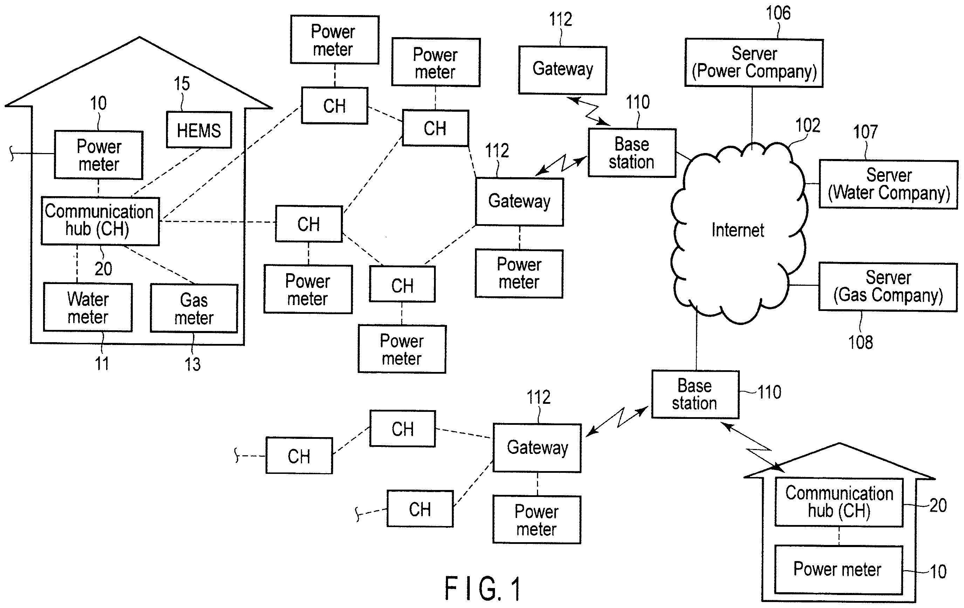

FIG. 1 is a block diagram showing an example of an electronic apparatus according to an embodiment connected to a server through a network such as the Internet. Although a smart meter which is a power meter having a communication function will be described in the embodiment, the meter is not limited to this.

Other meters at home, for example, a gas or water meter having the communication function may be applied. Not only the meters but also electronic apparatuses driven by a commercial power source and required to inform an external apparatus of a power failure can be applied. Although FIG. 1 shows a smart meter in which a meter function and a communication function are stored in different units, and both the units are rigidly combined before shipment from a factory or detachably combined by the user, both the functions may be stored in an integrated unit. The units are detachably combined to facilitate exchange of the communication unit when the communication unit breaks down or when a function is upgraded. Both the units are connected to each other by wireless communication.

A power meter 10 is connected to a service line of a commercial power source to a home. Meter data of the power meter 10 is transmitted to a communication hub (CH) 20 by wireless communication conforming to the ZigBee standard periodically, for example, every 30 minutes. Other meters at home, for example, a water meter 11 and a gas meter 13 also transmit the meter data to the communication hub 20 by the wireless communication conforming to the ZigBee standard. A home gateway 15 of a home energy management system (HEMS) may be connected to the communication hub 20, or the communication hub 20 itself may function as the home gateway of the HEMS.

The communication hub 20 transmits the meter data received from each meter to servers 106, 107, and 108 of electric, water and gas companies through the Internet 102. The communication hub 20 and the Internet 102 are connected to each other, for example, through a base station of a 2G or 3G mobile phone, or through an aggregation device of a power line. A communication hub 20 provided in a place with high radio field intensity of a mobile phone line is connected to the base station through the mobile phone line. Such a communication hub 20 connected to the base station through the mobile phone line is called a gateway 112. A communication hub 20 provided in an apartment house, a building, etc., is connected to the aggregation device through the power line. Base station 110 and the aggregation device are connected to the Internet 102.

The communication hub 20 and the Internet 102 are connected by a wireless multi-hop method confirming to the IEEE 802.15.4 standard in a region with low radio field intensity of, for example, the 2G or 3G mobile phone line. The wireless multi-hop method is a method of sequentially multi-hopping other communication hubs which can be wirelessly communicated, and transmitting data to the gateway 112. A plurality of communication hubs are network-connected in a mesh shape below one communication hub (gateway). A transmission destination of data of each communication hub is predetermined by measuring radio field intensity when a smart meter is provided at home. Alternatively, a plurality of communication hubs (gateways) may be determined as candidates, and the cost of communication quality, etc., of a radio path to a gateway may be calculated at the time of actual communication to determine the transmission destination of data of each communication hub such that the cost can be the lowest.

The power meter 10 is connected to the service line of the commercial power source to each home, and the communication hub 20 is connected to the power meter 10 of each home, as described above. Thus, when the communication hub 20 detects a power failure and informs the server 106 of the power failure, a power company can know which communication hub 20 is connected to a power meter 10 lacking power, and timely understand in which area the power failure occurs. The communication hub 20 is configured to report the power failure to the server 106 upon detection of the power failure, and to report recovery of the power failure to the server 106 upon detection of the power failure recovery. Although the identification number of the communication hub 20 is indispensable for the power failure information and the recovery information, a power failure time or a recovery time is not indispensable. These times may be considered to be the time when the server 106 receives report information.

However, since the communication hub 20 operates with a commercial power source, an operation power source is not supplied during the power failure, and the power failure information cannot be communicated to a server. Since the power meter 10 and the communication hub 20 are provided in the outdoors where natural environment is severe, a battery is hard to mount on the communication hub 20. Then, the communication hub 20 includes a large-capacitance condenser to have power for transmitting the power failure information to the server 106 during the power failure, and transmits it using the power stored in the condenser when the power failure occurs.

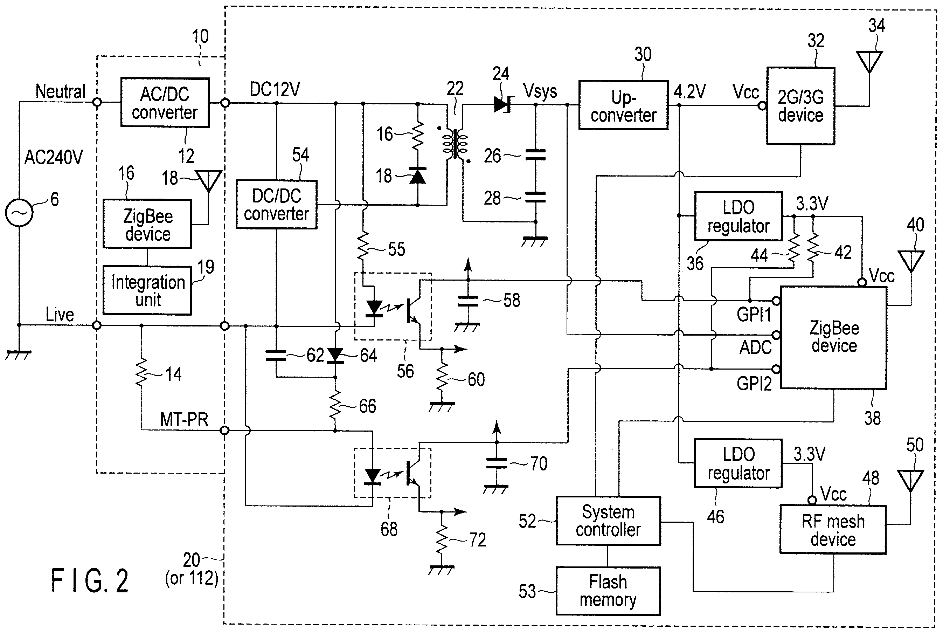

FIG. 2 is a circuit diagram showing an example of a circuit configuration of the communication hub 20 (or the gateway 112) which is the electronic apparatus according to the embodiment. The gateway 112 is the same as the communication hub 20 in structure, and the communication hub 20 and the gateway 112 are collectively called the communication hub 20 for convenience in the description of FIG. 2. The gateway 112 is located in a position with high radio field intensity of a mobile phone line, and the communication hub 20 is located in a position with low radio field intensity. A normal commercial power source 6 (for example, alternating current 200V or 100V in Japan, and 240V in the U.K.) is applied to the power meter 10. A power source line of the commercial power source 6 includes, for example, a neutral line of alternating current 240V and a live line of a ground level which is not insulated.

The power meter 10 includes an AC/DC converter 12, a pull-down resistor 14 for tamper detection, a ZigBee device 16, an antenna 18, an integration unit 19, etc. An alternating voltage from the neutral line is supplied to the AC/DC converter 12, converted into a direct voltage (for example, 12V DC), and supplied to the communication hub 20 through a connector as a power source. The live line bypasses the power meter 10, and is connected to the ground line of the communication hub 20. A connector between the power meter 10 and the communication hub 20 is provided with a tamper detection terminal MT_PR as well as a 12V DC terminal and a live line terminal. The tamper detection terminal MT_PR of the communication hub 20 is connected to the live line through the pull-down resistor 14 (for example, 10Ω) in the power meter 10.

Domestic interconnect to which an electrical apparatus (not shown) is connected is connected to the power meter 10, and an integrated value of energy consumption of the electrical apparatus is obtained in the integration unit 19. Integrated power level is wirelessly transmitted to the communication hub 20 periodically (for example, every 30 minutes) using the ZigBee device 16 and antenna 18. The communication hub 20 is attached to the power meter 10, and a power source voltage is supplied from the power meter 10 through a connector; however, the meter data (integrated power level) of the power meter 10 is not transmitted to the communication hub 20 through the connector, but transmitted from the power meter 10 to the communication hub 20 by wireless communication conforming to the ZigBee standard. It should be noted that other structures can be applied. The meter data of the power meter 10 may be transmitted to the communication hub 20 (a system controller 52 to be described later) through the connector.

Use data from meters at home other than the power meter 10, such as the gas meter 13 and the water meter 11, is also transmitted from the ZigBee device included in each meter to the communication hub 20, and received in the communication hub 20 through an antenna 40 and a ZigBee device 38. That is, the communication hub 20 can wirelessly receive the meter data from various meters as well as the power meter 10 periodically (for example, every 30 minutes), and transmit it to a server.

A direct voltage of, for example, 12V supplied from the power meter 10 to the communication hub 20 is transformed through a transformer 22, and output as a Vsys voltage of, for example, 4.2V through a diode 24. Both ends of a primary winding of the transformer 22 are connected to each other through a resistor 16 and diode 18. A DC/DC converter 54 is also connected to the primary side of the transformer 22, and 12V DC is supplied to the DC/DC converter 54. Both ends of a secondary winding of the transformer 22 are connected to each other through electric-double-layer capacitors (hereinafter referred to as super-capacitors) 26 and 28 in series, and the output voltage Vsys of the transformer 22 charges the large-capacitance super-capacitors 26 and 28. An end of the super-capacitor 26 is connected to a diode 24, and an end of the super-capacitor 28 is grounded. For example, each of the super-capacitors 26 and 28 includes a capacitor of 25 F, and series-connected super-capacitors 26 and 28 include a capacitor of 12.5 F. The capacitance is set to have a value by which the output voltage Vsys of the transformer 22 can be kept for a given period even if supply of 12V DC to the communication hub 20 is interrupted due to a power failure, etc., and by which the communication hub 20 can be operated for some period even during the power failure.

The communication hub 20 includes a plurality of wireless communication devices, for example, three wireless communication devices, for example, a 2G/3G device 32, ZigBee device 38 and an RF mesh device 48 (constituting a mesh network conforming to the IEEE 802.15.4 standard). The ZigBee device 38 is configured to receive meter data from various meters at home, and the 2G/3G device 32 and the RF mesh device 48 are configured to transmit the meter data received from the various meters by ZigBee device 38 to the server side (the Internet 102). The 2G/3G device 32 communicates using a mobile phone line, and is used in the gateway 112 with sufficient radio field intensity of a mobile phone. In the communication hub 20 with insufficient radio field intensity of the mobile phone, the RF mesh device 48 which performs multi-hop between the communication hubs 20 (meters) for communication is used. As described above, only one of the 2G/3G device 32 and the RF mesh device 48 is used for the wireless transmission to the server side (the Internet 102) depending on an installation environment. Although the other communication device is considered to be unnecessary, the communication hub 20 includes both the communication devices because a radio wave environment of the mobile phone sometimes changes after installation for the reason of new construction of a base station of a mobile phone, construction of a building causing radio interference, etc. The transmission to the server side is not necessarily performed wirelessly. A power line may be used. The transmission with the power line is mainly adopted in an apartment house, a building, etc.

While an operating voltage of the 2G/3G device 32 is 3.4 to 4.2V (typically 3.8V), those of the ZigBee device 38 and the RF mesh device 48 are 3.3V (typically). The voltage of the super-capacitor is reduced from 4.2V when 12V DC is interrupted due to a power failure, etc. Thus, the output Vsys of the transformer 22 is boosted to, for example, DC 4.2V through an up-converter 30, and supplied to a power source terminal Vcc of the 2G/3G device 32. The 2G/3G device 32 can transmit the meter data to, for example, the server 106 of the power company even during the power failure by communicating with the base station 110 of mobile phone communication through an antenna 34.

The output Vsys of the transformer 22 is transformed into 3.3V through the up-converter 30 and a low drop out (LDO) regulator 36, and supplied to a power source terminal Vcc of the ZigBee device 38. The ZigBee device 38 receives the meter data from various meters by communicating with the various meters through an antenna 40. The RF mesh device 48 goes through (hops) an RF mesh device of another communication hub 20 via an antenna 50, and transmits the received meter data to the gateway 112. The 2G/3G device 32 transmits the meter data received from the meter, or that received from the other communication hub 20 to the base station 110 through the antenna 34.

The output Vsys of the transformer 22 is transformed into 3.3V through the up-converter 30 and an LDO regulator 46, and supplied to a power source terminal Vcc of the RF mesh device 48. The RF mesh device 48 also forms a wireless mesh network with other communication hubs 20 through an antenna 50, and transmits the meter data to the gateway 112.

The system controller 52 is connected to the 2G/3G device 32, ZigBee device 38 and RF mesh device 48, and transmission and reception of the meter data are controlled. The meter data from various meters received by, for example, the ZigBee device 38 is periodically transmitted from the 2G/3G device 32 or the RF mesh device 48 to the server side under control of the system controller 52. A flash memory 53 is connected to the system controller 52, and identification information of the communication hub 20, the meter data received from other meters, etc., are written in the flash memory 53.

The communication hub 20 is designed to operate for 30 seconds from the occurrence of a power failure, and to inform the server of the power failure within the period. If a time for transmitting the meter data comes within this period, the transmission of the meter data may be cancelled to give high priority to the transmission of the power failure information. Since the meter data is stored in the flash memory 53, it can be transmitted after the power failure is recovered. Thus, the capacitance of the super-capacitors 26 and 28 is determined such that the communication hub 20 can maintain Vsys for 30 seconds even if the supply of 12V DC from the power meter 10 is interrupted. The communication hub 20 can perform a Last Gasp operation within 30 seconds to notify a server of the power failure (through gateway, base station and the Internet) using the 2G/3G device 32 or the RF mesh device 48. The server 106 is expected to take proper measures when notified of the power failure. After notifying the server of the power failure, the communication hub 20 may stop the operation.

A power failure occurs in an area. Since a number of communication hubs 20 simultaneously transmit the power failure information to the server side during the power failure, a mesh network is crowded, and the transmission needs to be retried. The retry can be performed up to three times. It takes 30 seconds to perform the retry three times. However, the server is not necessarily surely notified of the power failure within 30 seconds at the time of a massive blackout. Further, if the gateway 112 is to be notified of the power failure information through the mesh network, it cannot be necessarily said that no power failure occurs in all the communication hubs 20 included in the mesh network. If the mesh network includes a communication hub 20 being in power failure, the gateway 112 may not be notified of the power failure information. Then, in the present embodiment, after transmitting the power failure information to any of wirelessly-connected communication hubs in which a mesh network is constructed in advance, the communication hub 20 establishes a connection with an unconnected communication hub or gateway currently not included in the mesh network to transmit preliminarily the power failure information to also the communication hub or gateway. This increases a possibility that the power failure information is surely transmitted to the server since the power failure information is transmitted to the server side through at least two routes.

The power failure information may be only identification information of the communication hub 20 being in power failure. A power failure time may be detected by the communication hub 20 and indicated to the server 106. Since the server 106 can also regard the time when the power failure information is received as the power failure time, the power failure time need not be transmitted. To correctly recognize the power failure, the power failure time should be detected in the communication hub 20. If information is to be transmitted as little as possible during operation by power of the super-capacitors 26 and 28 being in power failure, the power failure time may be written in the flash memory 53 and transmitted to the server 106 along with the recovery time after the power failure is recovered. The server 106 is surely informed of the power failure time information if the server 106 of the power failure time is informed when a stable operation is guaranteed after the power failure recovery. The writing in the flash memory 53 is possible with a little power and thus also possible, even during the power failure, with the power of the super-capacitors 26 and 28.

Since the power failure can be detected using the change of a source voltage supplied from the power meter 10, it can be detected by any of the communication devices 32, 38 and 48. A case where the power failure is detected by the ZigBee device 38 is hereinafter assumed as an example. The ZigBee device 38 includes the GPI1 terminal, the GPI2 terminal and the ADC terminal to detect the power failure. If the other devices are provided with the GPI1 terminal, the GPI2 terminal and the ADC terminal in the same manner, they can also detect the power failure.

Since the voltage from the power meter 10 is a non-isolated voltage, a circuit for realizing the above detecting function of the communication hub 20 is desirably insulated from the power meter 10. The output Vsys of the transformer 22 is connected to the ADC terminal of the ZigBee device 38, and 12V DC supplied from the power meter 10 is connected to the GPI1 terminal and the GPI2 terminal of the ZigBee device 38 through photo couplers 56 and 68. Then, the ZigBee device 38 is insulated from the commercial power source.

An anode of an LED of the photo coupler 56 is connected to the 12V DC line through a resistor 55, and a cathode thereof is connected to the live line. A collector of a phototransistor of the a photo coupler 56 is connected to the GPI1 terminal and grounded through a capacitor 58. An emitter of the phototransistor of the photo coupler 56 is grounded through a resistor 60. The GPI1 terminal is connected to an output voltage 3.3V of LDO regulator 36 through a resistor 42.

Thus, 12V DC on the primary side is reversed by the photo coupler 56 and transmitted to the secondary side, and the change is detected in the GPI1 terminal. The super-capacitors 26 and 28 are connected to the secondary side of the transformer 22 at the moment. Even if supply of the power source (12V DC) stops, the output voltage Vsys of the transformer 22 is maintained for a given period. Thus, the ZigBee device 38 can operate for the period, allowing the change of the GPI1 terminal from low to high to be detected.

An anode of an LED of the photo coupler 68 is connected to the tamper detection terminal MT_PR, and connected to a 12V DC line through a resistor 66 (for example, 510Ω) and diode 64. A connection point between the resistor 66 and the diode 64 is connected to the live line through a capacitor 62 (for example, 22 µF). Since the tamper detection terminal MT_PR is connected to the live line through the pull-down resistor 14 in the power meter 10, the anode of the LED of the photo coupler 68 is also connected to the live line through the pull-down resistor 14. A cathode of the LED of the photo coupler 68 is connected to the live line. That is, the pull-down resistor 14 is connected between the anode and cathode of the LED of the photo coupler 68. A collector of a phototransistor of the photo coupler 68 is connected to the GPI2 terminal and grounded through a capacitor 70. An emitter of the phototransistor of the photo coupler 68 is grounded through a resistor 72. The GPI2 terminal is connected to the output voltage 3.3V of the LDO regulator 36 through the resistor 44.

As described above, the tamper detection terminal MT_PR is pulled down through the resistor 14 in the power meter 10, but is pulled up to 12V DC through the resistor 66 on the primary side of the communication hub 20. Thus, when the communication hub 20 is removed from the power meter 10, the tamper detection signal MT_PR is switched from low to high. Even if the removal from the power meter 10 terminates the supply of the power source (12V DC), the capacitor 62 of 22 µF is connected between the connection point of the resistor 66 and diode 64 and the live line, allowing the tamper detection signal MT_PR to be temporarily kept high.

12V DC on the primary side is reversed by the photo coupler 68 and transmitted to the secondary side, and the change is detected in the GPI2 terminal. The super-capacitors 26 and 28 are connected to the secondary side of the transformer 22 at the moment. Even if the supply of the power source (12V DC) stops, the output voltage Vsys of the transformer 22 is maintained for a given period. Thus, the ZigBee device 38 can operate for the period, allowing the change of the GPI2 terminal from high to low to be detected.

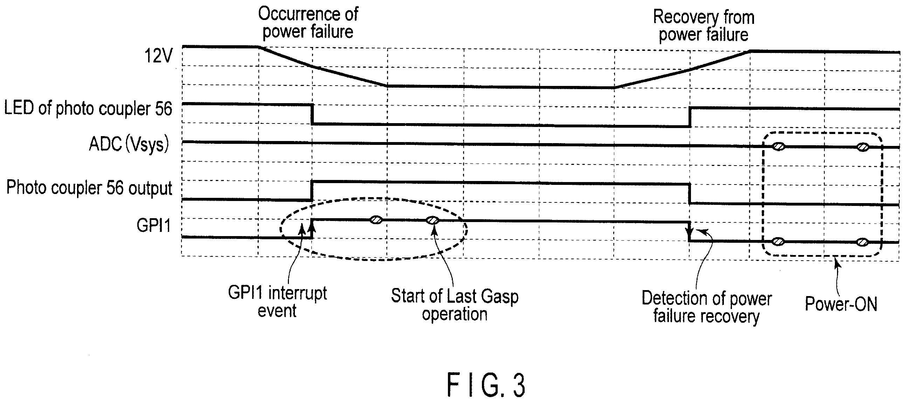

FIG. 3 is a timing chart showing an example of operations for detecting a power failure and recovery from the power failure. The power failure and the recovery from the power failure are detected using charges of the super-capacitors 26 and 28 on the secondary side of the transformer 22. The charging capacitance gradually decreases from immediately after the occurrence of the power failure.

The capacitors 26 and 28 are connected to the output terminal in the power meter 10. The voltage of the 12V DC line in the communication hub 20 is gradually reduced in power failure, as shown in FIG. 3. When it is reduced to a value less than or equal to a threshold value, the photo coupler 56 is turned off and emission of the LED stops. Thus, the output of the photo coupler 56 changes from low to high, and the GPI1 terminal changes from low to high. When the GPI1 terminal changes from low to high, the ZigBee device 38 detects interruption. Then, the ZigBee device 38 monitors the state of the GPI1 terminal at designated intervals, for example, every second. On detecting the high state twice in a row, the ZigBee device 38 starts the Last Gasp operation for notifying the server side that the power failure information (including at least the identification number of the own device) is detected. More specifically, the ZigBee device 38 notifies the system controller 52 of the power failure detection. The system controller 52 writes the power failure time information in the flash memory 53, and notifies the server 106 of the power company of the power failure information through the gateway 112, the base station 110 and the Internet 102 using the 2G/3G device 32 or the RF mesh device 48. The power company can estimate a region being in power failure based on the identification number of a device included in the power failure information to start the recovery operation, allowing the recovery time from the power failure to be reduced.

The power failure is not immediately detected by change of the GPI1 terminal from low to high to prevent the power failure from being erroneously detected based on an unstable operation. Thus, the power failure may be immediately detected by interrupt detection when the operation is stable. If it is not immediately detected by the interrupt detection, the number of times of detection is not limited to two but may be one, three or more. The detection may not be performed every second but may be performed at arbitrary intervals (including irregular intervals).

When the 12V DC line increases up to a threshold value after the recovery from the power failure, the photo coupler 56 is turned on, an output thereof becomes low, and the GPI1 terminal changes from high to low. When the GPI1 terminal changes from high to low, the ZigBee device 38 detects interruption, then monitors the state of the GPI1 terminal and that of the ADC terminal to which Vsys is supplied for a designated period, for example, every 1.5 seconds. When GPI1 is low and ADC is high (Vsys is kept high by the charges of the super-capacitors 26 and 28 until the recovery from the power failure) twice in a row, the server side is notified of power-on indicating the recovery from the power failure. The recovery, as well as the power failure, may be immediately detected by the interruption. If it is detected a plurality of times, the number of times can be properly changed.

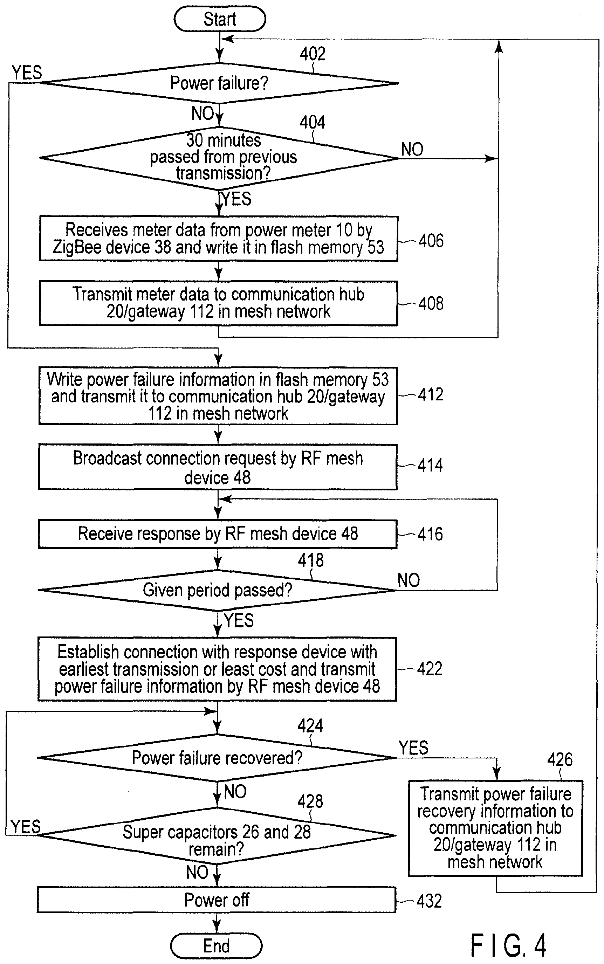

FIG. 4 is a flowchart showing an example of an operation of the communication hub 20 according to the embodiment. As described above, the communication hub 20 and the gateway 112 are similar in structure. The gateway 112 is connected to the base station 110 using the mobile phone line. The communication hub 20 is not connected to the base station 110 using the mobile phone line, and constitutes a mesh network with a number of other communication hubs. Data transmitted from the communication hub 20 multi-hops other communication hubs, and is transmitted to the gateway 112. The communication hub 20 is connected to the base station 110 through the gateway 112. When the radio field intensity of the mobile phone line changes, the gateway 112 may be changed to the communication hub 20, or the communication hub 20 may be changed to the gateway 112.

In block 402, it is determined whether a power failure occurs or not. The power failure is detected by the system controller 52 based on the voltage of the GP11 terminal of the ZigBee device 38, as shown in FIG. 3. If the power failure occurs, the processing goes to block 412. If not, it is determined in block 404 whether 30 minutes have passed from the start of an operation or from the previous transmission of the meter data or not. This is because the meter data is determined to be transmitted to the server 106 every 30 minutes. If 30 minutes have not passed, the processing returns to block 402.

If 30 minutes have passed, the ZigBee device 38 receives the meter data transmitted from various meters, for example, the ZigBee device 16 of the power meter 10 (meter reading amount, meter reading time, identification information of communication hub, etc.) through the antenna 40 in block 406. The system controller 52 writes the received meter data in the flash memory 53 because the meter data needs to be retransmitted at the time of a transmission failure. Although the meter data from the power meter 10 is described for convenience, that from the other meters, that is, meters 11 and 13 is processed in the same manner. The meter data is periodically transmitted from various meters. A transmission period can be defined for each meter, and need not be shared by all meters.

In block 408, the system controller 52 reads the meter data from the flash memory 53, and the RF mesh device 48 transmits the meter data from the antenna 50 to one with least cost of some communication hubs 20 or gateways 112, which are transmission destination candidates, in a mesh network prebuilt when communication hub 20 is installed. The cost relates also to quality of a radio path from the communication hub 20 to the gateway 112. The higher the quality is, the lower the cost is. If a gateway 112 is included in the candidate, the gateway 112 is always selected, and no communication hub 20 is selected. A communication hub 20 that has received the meter data transmits the data to another communication hub 20 in the same manner. As described above, the meter data hops over the mesh network a number of times, and is transmitted to the gateway 112. It is then transmitted from the gateway 112 to the base station 110 through the mobile phone line, and uploaded onto the server 106 of the power company through the Internet 102 every 30 minutes.

When the system controller 52 detects a power failure in block 402, the system controller 52 transmits the power failure information to the one with least cost of some communication hubs 20 or gateways 112, which are transmission destination candidates, in the prebuilt mesh network in block 412. The power failure information includes the identification number of the own device (communication hub), the power failure time, etc.. As well as the meter data, the power failure information hops over the mesh network a number of times, and is transmitted to the gateway 112. It is then transmitted from the gateway 112 to the base station 110 through the mobile phone line, and uploaded onto the server 106 of the power company through the Internet 102. Further, the system controller 52 writes the power failure information in the flash memory 53 for subsequent retransmission.

As described with reference to FIG. 3, when a power failure occurs, the GPI1 terminal changes from low to high. Then, the ZigBee device 38 monitors the state of the GPI1 terminal at designated intervals, for example, every second. When detecting the high state twice in a row, it detects the power failure. Since both ends of the secondary winding of the transformer 22 are connected to each other through the large-capacitance super-capacitors 26 and 28 in series in the communication hub 20, the super-capacitors 26 and 28 are charged by the output voltage Vsys of the transformer 22. Thus, the output voltage Vsys of the transformer 22 is temporarily kept by the charges of the super-capacitors 26 and 28 even during the power failure, allowing the power failure time information to be surely written in the flash memory 53.

Next, in block 414, the system controller 52 broadcasts a connection request from the RF mesh device 48 to an unconnected communication hub 20 or gateway 112 in order to preliminarily transmit the power failure information in a different way including a communication hub or gateway being free from the power failure, in preparation for the case where the communication hub or gateway to which the power failure information is transmitted in block 412 is in power failure, and no power failure information can be hopped.

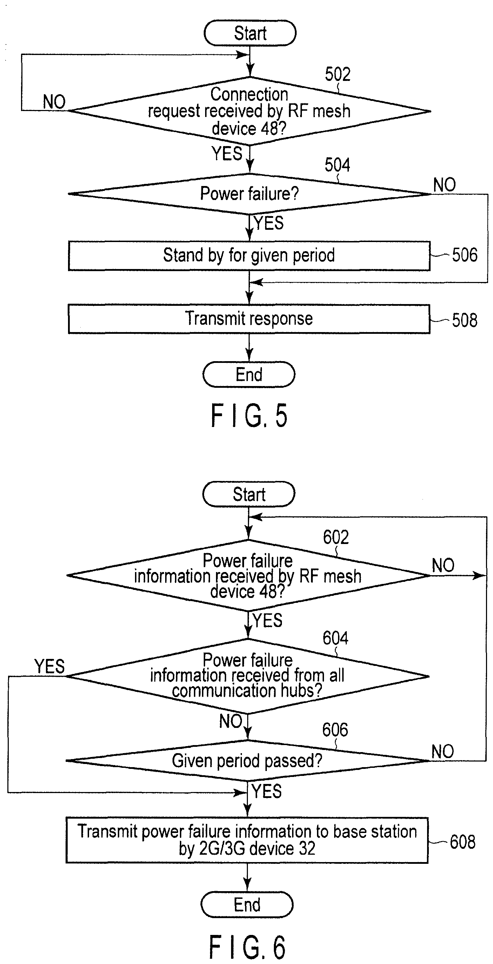

FIG. 5 shows an example of a responding operation of the communication hub 20 or the gateway 112 that has received the connection request. It is determined in block 502 whether the connection request is received from the RF mesh device 48 or not. If it is not received, the processing stands by in block 502. If it is received, it is determined in block 504 whether the power failure occurs or not. If the power failure does not occur (in operation with the commercial power source), a response is immediately sent in block 508. If the power failure occurs (in operation with the charges of the super-capacitors 26 and 28), the response is sent in block 508 after a given period is delayed in block 506. Thus, an apparatus that has sent the connection request can distinguish whether a response apparatus is in power failure or not in accordance with the timing of receiving the response. The timing of sending the response depends on whether the power failure occurs or not. It is possible to transmit the power failure information to an apparatus being free from the power failure.

Referring to FIG. 4, a response signal from another communication hub 20 or the gateway 112 (free from the power failure) is received by the RF mesh device 48 in block 416. In block 418, it is determined whether a given period has passed from the transmission of the connection request or not. The given period is the same as or longer than the delayed given period in block 506 of FIG. 5. If the given period has not passed, the processing returns to block 416, and the reception of the response signal continues. As shown in FIG. 5, the response from the apparatus being in power failure is not generated until the given period has passed, that is, it is generated after the given period passed. The response from the apparatus free from the power failure is received with priority by stopping the reception of the response and going to block 422 after the given period has passed.

In block 422, a destination device (the communication hub 20 or the gateway 112) is determined. If a response signal is transmitted from only a single device, the device is considered to be the destination device. If response signals are transmitted from a plurality of devices, a response device (the communication hub 20 or the gateway 112) that transmits the response signal the earliest, or a response device with least cost is considered to be the destination device. If the response signal is transmitted from the gateway 112, the communication hub 20 is not selected, and the gateway 112 is always selected. When the destination device is determined, a connection is established with the destination device, and the power failure information is transmitted. Thus, the power failure information is transmitted to a designated device which is connected in advance (block 408) and also to a new device which was unconnected but is connected upon the connection request (block 422). It is unclear whether the designated device of the transmission destination in block 408 is in power failure or not. However, the device of the transmission destination in block 422 that has responded by the time the given period passes from the connection request is not in power failure; thus, there is almost no possibility that a transmission channel (mesh network) is disconnected by the time the power failure information is transmitted to the server.

In block 424, it is determined whether the power failure is recovered or not. The power failure recovery is detected by the system controller 52 based on the voltage of the GPI1 terminal and the voltage Vsys of the ADC terminal of the ZigBee device 38, as shown in FIG. 3. If the power failure is recovered, in block 426, the power failure recovery information (ID information of apparatus, recovery time, etc.) is transmitted to one with least cost of the communication hubs 20 or the gateways 112 which are connected in advance.

If the power failure is not recovered, it is determined, in block 428, whether the charges of the super-capacitors 26 and 28 remain or not. The charges of the super-capacitors 26 and 28 are reduced as time passes. When the time passes to some extent, the communication hub 20 is disabled. If the charges do not remain, the power source of the communication hub 20 completely lost in block 432, and the communication hub 20 becomes in a power off state. If the charges of the super-capacitors 26 and 28 remain, the determination block of the power failure recovery in block 424 is re-executed.

FIG. 6 is a flowchart showing an example of an operation of the gateway 112 when the power failure information is received. The communication hubs 20 other than the gateway 112 receive the power failure information and power failure recovery information transmitted from another communication hub 20 using the RF mesh device 48, and transmit them to another communication hub 20 or gateway 112 using the RF mesh device 48 in the same manner. The gateway 112 receives the power failure information and power failure recovery information transmitted from another communication hub 20 using the RF mesh device 48, and transmits them to base station 110 using the 2G/3G device 32. As described above, the gateway 112 performs reception and transmission using different devices. When the reception and transmission are frequently repeated, the devices need to be frequently switched, which is inefficient. When the power failure information is received using the RF mesh device 48 in block 602, it is determined in block 604 whether the power failure information from all the communication hubs 20 connected to the gateway 112 is received or not. If the power failure information from all the communication hubs 20 is received, block 608 is executed.

If the reception of the power failure information from all the communication hubs 20 is not completed, it is determined in block 606 whether a given period has passed or not. If the given period has passed, block 608 is executed, and if the given period has not passed, the power failure information reception in block 602 is executed.

If the power failure information from all the communication hubs 20 is received, or if the given period has passed, the power failure information received using the RF mesh device 48 by then is collectively transmitted to the base station 110 using the 2G/3G device 32 in block 608. This allows the reception using the RF mesh device 48 and the transmission using the 2G/3G device 38 to be effectively performed.

As described above, when the communication hub detects the power failure, the power failure information is transmitted to the gateway through a designated communication hub which is already connected, or directly to a designated gateway, and then transmitted to the server side. Furthermore, the connection request is transmitted also to an unconnected communication hub or gateway. A connection to an apparatus free from the power failure and that have responded is established, and the power failure information is transmitted to the apparatus. Thus, even if the designated communication hub or gateway which is connected from the beginning is in power failure, an apparatus in which a connection is newly established is free from the power failure. If there is no apparatus free from the power failure, the power failure information may be transmitted to an apparatus in power failure. Thus, the power failure information can be surely transmitted to the server.

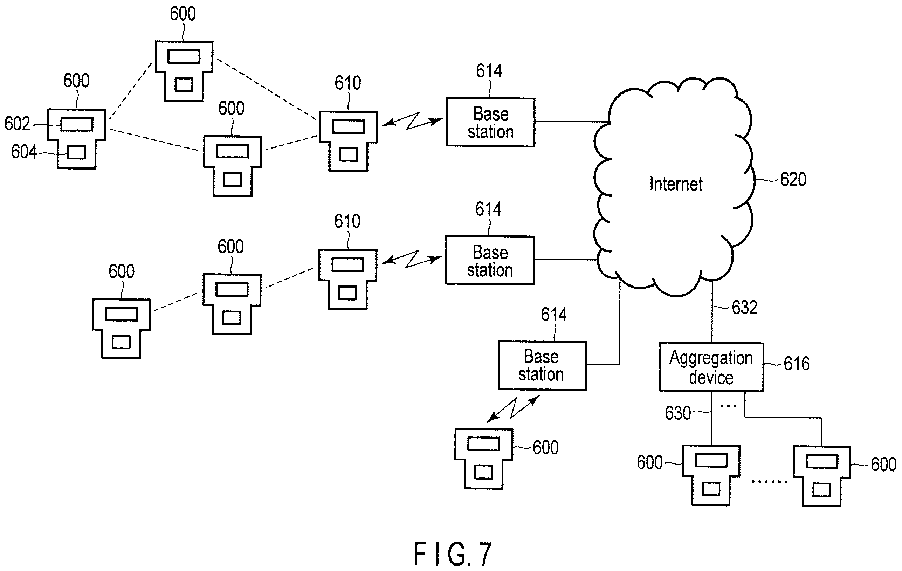

The above description is provided on the premise that the power meter 10 is different from the communication hub 20, but both functions may be included in one unit. FIG. 7 is a block diagram of an example of a state where an electronic apparatus according to this modified embodiment is connected to a network. While the communication hub 20 constitutes a mesh network in FIG. 1, a smart meter 600 integrating a power meter 604 and a communication unit 602 constitutes the mesh network in FIG. 7. The smart meter 600 need not be connected to the Internet 620 through the mesh network or the base station 614 of a mobile phone. The smart meter 600 in an apartment house or a building may be connected to an aggregation device 616 in the building through a connection line 630, and the aggregation device 616 may be connected to the Internet 620 through a power line 632.

In the above description, the power failure time information may merely written in the flash memory 53, and may not indicated to the server 106 during the power failure. If the super-capacitors 26 and 28 include enough power, the server 106 may be immediately informed of the power failure time information without the need to wait until the power failure recovery. It should be note that if data is likely to be transmitted from the server 106 to the side of the communication hub 20, the transmission of the power failure time information to the server 106 may be avoided until the power failure recovery in order to store the power of the super-capacitors 26 and 28 to allow data to be received even during the power failure. For example, this is a case where a firmware of a communication function of the communication hub 20 is updated from the server 106.

Furthermore, the smart meter which is a power meter having a communication function has been described as the embodiment, but the smart meter is not limited to this. An electronic apparatus driven by a commercial power source and configured to inform an external apparatus of the power failure can also be applied. Further, the smart meter without a battery has been described, but a battery may be mounted on the smart meter.

In FIG. 4, the response is received for a given period in blocks 416 and 418 after the connection request is transmitted. If a connection is established with an apparatus that has transmitted the response first, it is unnecessary to wait for the given period. When the first response is received in block 416, block 418 for waiting for the given period need not be executed.

Whether the communication hub or gateway is in power failure or not is determined by the time for returning the response in FIG. 5. The apparatus being in power failure need not respond. It suffices that the communication hub or gateway that has transmitted the connection request determines a transmission destination from apparatuses that have responded.

Further, not only one but also two or more apparatuses may establish a connection to preliminarily transmit the power failure information in block 422 of FIG. 4. That is, the power failure information may be transmitted not doubly but triply or more.

The power failure or power failure recovery is detected based on the level of the GPI1 terminal. Other similar methods may be used to detect the power failure or power failure recovery.

Since the processing according to the present embodiment can be realized by a computer program, an advantage similar to that of the present embodiment can be easily realized merely by installing the computer program in a computer through a computer-readable storage medium storing the computer program and executing it.

The present invention is not limited to the above-described embodiments, but may be modified in various ways without departing from the scope. Various inventions can be realized by appropriately combining the structural elements disclosed in the embodiments. For instance, some of the disclosed structural elements may be deleted. Some structural elements of different embodiments may be combined appropriately.

## Claims

1. An electronic apparatus configured to have an established wireless connection with a first apparatus, the electronic apparatus comprising:
power meter (10);
a first communication device (38) powered by a commercial power source (6) of the power meter (10) and configured to receive meter data from the power meter (10);
a at least one second communication device (32, 48) configured to transmit the meter data received by the first communication device (38) to the first apparatus, wherein the second communication device is a wireless communication device;
a controller (52) connected to the first communication device (38) and the at least one second communication device (32, 48) and configured to control transmission and reception of the meter data by means of the at least one second communication device (32, 48); and
a capacitor (26, 28) charged by the commercial power source (6) of the power meter (10) and configured to supply power to the first communication device (38) and the at least one second communication device (32, 48) during a power failure of the power meter (10);
wherein the controller (52) is configured to detect the power failure of the power meter (10) and to transmit information related to the power failure of the power meter (10) to the first apparatus when detecting the power failure; and
the controller (52) is further configured to establish a wireless connection with a second apparatus free from a power failure when detecting the power failure of the power meter (10), and to transmit the information related to the power failure of the power meter (10) to the second apparatus from the at least one second communication device (32, 48).

2. The electronic apparatus of Claim 1, wherein the controller (52) is configured to transmit a connection request to a plurality of wireless-connection-unestablished apparatuses, and determine whether the plurality of apparatuses are in power failure in accordance with a receipt time of a response to the connection request returned from the plurality of apparatuses.

3. The electronic apparatus of Claim 2, wherein the controller (52) is configured to receive a response within a given period from the transmission of the connection request, and to determine that an apparatus of the wireless-connection-unestablished apparatus that has transmitted the received response is the second apparatus.

4. The electronic apparatus of Claim 2, wherein upon receipt of a connection request from another wireless-connection-unestablished apparatus, the controller (52) is configured to delay to return a response during the power failure of the power meter (10).

5. The electronic apparatus of any one of Claims 1 to 4, wherein the controller (52) is configured to receive information related to a power failure from a plurality of other apparatuses by the second communication device (32, 48), and
to collectively or sequentially transmit a plurality of information items related to the power failure from the plurality of other apparatuses to the second apparatus.

6. The electronic apparatus of Claim 5, wherein the controller (52) is configured to receive a plurality of information items related to a power failure from a plurality of other apparatuses for a given period by the second communication device (32, 48).

7. The electronic apparatus of any one of Claims 1 to 6, further comprising other meters (11, 13) than the power meter (10) and wherein
the controller (52) comprises a memory(53) configured to store the information related to the power failure of the power meter (10), meter data of the power meter (10), and information indicative of a power failure time, and meter data of other meters.

8. The electronic apparatus of Claim 7, wherein the first communication device (38) is configured to receive the meter data from the power meter (10) through an antenna (40), and
the controller (52) is configured to store the meter data in the memory and transmit the meter data to the first apparatus through the at least one second communication device (32, 48), and
the controller (52) is configured to receive the information related to the power failure from the first apparatus through the at least one second communication device (32, 48) and transfer the received information to another apparatus through the at least one second communication device (32, 48).

9. The electronic apparatus of any one of Claims 1 to 8, wherein the information related to the power failure of the power meter (10) comprises a power failure time and identification information of the electronic apparatus.

10. A method for controlling an electronic apparatus according to any of claims 1 to 10, the method comprising:
charging the capacitor (26, 28) when the electronic apparatus is driven by the commercial power source (6);
monitoring the commercial power supplied to the first communication device (38) to detect the power failure of the power meter (10);
transmitting information related to a power failure of the power meter (10) to the first apparatus from the second communication device (32, 48) when detecting the power failure of the power meter (10); and
establishing a wireless connection with a second apparatus free from a power failure of the power meter (10) when the power failure is detected, and transmitting the information related to the power failure of the power meter (10) to the second apparatus from the at least one second communication device (32, 48).

## Patentansprüche

1. Elektronische Vorrichtung, die ausgestaltet ist, um eine eingerichtete drahtlose Verbindung mit einem ersten Gerät zu haben, wobei das erste Gerät umfasst:
ein Leistungsmessgerät (10);
eine erste Kommunikationsvorrichtung (38), die durch eine kommerzielle Leistungsquelle (6) des Leistungsmessgerätes (10) betrieben wird, und ausgestaltet ist, um Messdaten von dem Leistungsmessgerät (10) zu empfangen;
zumindest einer zweiten Kommunikationsvorrichtung (32, 48) die ausgestaltet ist, um die Messdaten, die von der ersten Kommunikationsvorrichtung (38) empfangen wurden, an das erste Gerät zu übertragen, wobei die zweite Kommunikationsvorrichtung eine drahtlose Kommunikationsvorrichtung ist;
eine Steuerung (53), die mit der ersten Kommunikationsvorrichtung (38) und der zumindest einen zweiten Kommunikationsvorrichtung (32,48) verbunden ist, und die ausgestaltet ist, um die Übertragung und den Empfang der Messdaten mittels der zumindest einen zweiten Kommunikationsvorrichtung (32,48) zu steuern;
einem Kondensator (36,28), der durch die kommerzielle Leistungsquelle (6) der Leistungsmessvorrichtung (10) geladen wird und der ausgestaltet ist, um Leistung an die erste Kommunikationsvorrichtung (38) und in die zumindest eine zweite Kommunikationsvorrichtung (32,48) während eines Leistungsausfalls des Leistungsmessgeräts (10) zu übertragen;
wobei die Steuerung (52) ausgestaltet ist, um den Leistungsausfall des Leistungsmessgerätes (10) zu erfassen und um Informationen bezüglich des Leistungsausfalls des Leistungsmessgerätes (10) an das erste Gerät zu übertragen, wenn der Leistungsausfall erfasst wird; und
wobei die Steuerung des Weiteren ausgestaltet ist, um eine drahtlose Kommunikation mit einem zweiten Gerät herzustellen, das frei von dem Leistungsausfall ist, wenn der Leistungsausfall des Leistungsmessgerätes (10) erfasst wird, und um die Informationen bezüglich des Leistungsausfalls des Leistungsmessegerätes (10) an die zweite Vorrichtung von dem der zumindest zweiten Kommunikationsvorrichtung (32,48) zu übertragen.

2. Elektronisches Gerät nach Anspruch 1, bei dem die Steuerung (52) ausgestaltet ist, um eine Verbindungsanfrage einer Mehrzahl von Geräten, deren drahtlose Verbindung nicht eingerichtet ist, zu übertragen, und um in Übereinstimmung mit einer Empfangszeit einer Antwort der Verbindungsanfrage, die von der Mehrzahl der Geräte zurückkommt zu bestimmen, ob die Mehrzahl der Geräte in einem Leistungsausfall sind.

3. Elektronisches Gerät nach Anspruch 2, bei dem die Steuerung (52) ausgestaltet ist, um eine Antwort innerhalb einer vorgegebenen Zeitspanne von der Übertragung der Verbindungsanfrage zu empfangen, und um zu bestimmen, dass ein Gerät der Geräte, zu dem eine Drahtlose Verbindung nicht eingerichtet ist, welches die empfangene Antwort übertragen hat, das zweite Gerät ist.

4. Elektronisches Gerät nach Anspruch 2, bei dem beim Empfang einer Verbindungsanfrage von einem anderen Gerät, dessen drahtlose Verbindung nicht eingerichtet ist, die Steuerung (52) ausgestaltet ist, um eine Rückgabe einer Antwort während eines Leistungsausfalls des Leistungsmessgerätes (10) zu verzögern.

5. Elektronisches Gerät nach einem der Ansprüche 1 bis 4, bei dem die Steuerung (52) ausgestaltet ist, um durch die zweite Kommunikationsvorrichtung (32,48) Information zu empfangen, die sich auf einen Leistungsausfall von einer Mehrzahl von anderen Geräten bezieht, und
um kollektiv oder sequenziell eine Mehrzahl von Informations-Unterpunkten bezüglich des Leistungsausfalls von der Mehrzahl der anderen Geräte zu dem zweiten Gerät zu übertragen.

6. Elektronisches Gerät nach Anspruch 5, bei dem die Steuerung (52) ausgestaltet ist, um eine Mehrzahl von Informations-Unterpunkten bezüglich eines Leistungsausfalls von einer Mehrzahl anderer Geräte für eine gegebene Zeitspanne durch die zweite Kommunikationsvorrichtung (32,48) zu empfangen.

7. Elektronisches Gerät nach einem der Ansprüche 1 bis 6, des Weiteren mit einem weiteren Messgerät (11,13) als dem Leistungsmessgerät (10), und bei dem,
die Steuerung (52) einen Speicher (53) umfasst, der ausgestaltet ist, um die Information bezüglich des Leistungsausfalls des Leistungsmessgerätes (10), Messdaten des Leistungsmessgerätes (10) und Information, die eine Leistungsfehlerzeit anzeigt, und Messdaten von anderen Messgeräten zu speichern.

8. Elektronisches Gerät nach Anspruch 7, bei dem die erste Verbindungsvorrichtung (38) ausgestaltet ist, um die Messdaten von dem Leistungsmessgerät (10) über eine Antenne (40) zu empfangen, und
wobei die Steuerung (52) ausgestaltet ist, um die Messdaten in dem Speicher zu speichern und um die Messdaten des ersten Gerätes über zumindest eine zweite Kommunikationsvorrichtung (32,48) zu übertragen, und
wobei die Steuerung (52) ausgestaltet ist, um Informationen bezüglich des Leistungsausfalls des zweiten Gerätes über die zumindest eine zweite Kommunikationsvorrichtung (32,48) zu empfangen, und um die empfangene Information an ein anderes Gerät über die zumindest eine zweite Kommunikationsvorrichtung (32,48) zu übertragen.

9. Elektronisches Gerät nach einem der Ansprüche 1 bis 8, bei dem die Information bezüglich des Leistungsausfalls des Leistungsmessgerätes (10) eine Leistungsausfallzeit und Erkennungsinformation des elektronischen Gerätes umfasst.

10. Verfahren zur Steuerung eines elektronischen Gerätes entsprechend einem der Ansprüche 1 bis 10, wobei das Verfahren umfasst:
Laden eines Kondensators (26,28), wenn das elektronische Gerät durch die kommerzielle Leistungsquelle (6) betrieben wird;
Überwachen der kommerziellen Leistung, die der ersten Kommunikationsvorrichtung (38) zugeführt wird, um einen Leistungsausfall des Leistungsmessgerätes (10) zu erfassen;
Übertragen von Information bezüglich eines Leistungsausfalls des Leistungsmessgerätes (10) zu dem ersten Gerät von der zweiten Kommunikationsvorrichtung (32,48), wenn der Leistungsausfall des Leistungsmessgerätes (10) erfasst wird;
Einrichten einer drahtlosen Kommunikation mit einem zweiten Gerät, das nicht von einem Leistungsausfall des Leistungsmessgerätes (10) betroffen ist, wenn der Leistungsausfall erfasst wird, und Übertragen der Information bezüglich des Leistungsausfalls des Leistungsmessgerätes (10) zu dem zweiten Gerät von der zumindest einen zweiten Kommunikationsvorrichtung (32,48).

## Revendications

1. Appareil électronique configuré pour avoir une connexion sans fil établie avec un premier appareil, l'appareil électronique comprenant :
un mesureur de puissance (10) ;
un premier dispositif de communication (38) alimenté par une source d'alimentation secteur (6) du mesureur de puissance (10) et configuré pour recevoir des données de mesure à partir du mesureur de puissance (10) ;
au moins un deuxième dispositif de communication (32, 48) configuré pour transmettre les données de mesure reçues par le premier dispositif de communication (38) au premier appareil, dans lequel le deuxième dispositif de communication est un dispositif de communication sans fil ;
une unité de commande (52) connectée au premier dispositif de communication (38) et à l'au moins un deuxième dispositif de communication (32, 48) et configurée pour commander la transmission et la réception des données de mesure à l'aide de l'au moins un deuxième dispositif de communication (32, 48) ; et
un condensateur (26, 28) chargé par la source d'alimentation secteur (6) du mesureur de puissance (10) et configuré pour fournir de l'électricité au premier dispositif de communication (38) et à l'au moins un deuxième dispositif de communication (32, 48) pendant une panne électrique du mesureur de puissance (10) ;
dans lequel l'unité de commande (52) est configurée pour détecter la panne électrique du mesureur de puissance (10) et pour transmettre des informations relatives à la panne électrique du mesureur de puissance (10) au premier appareil lors de la détection de la panne électrique ; et
l'unité de commande (52) est en outre configurée pour établir une connexion sans fil avec un deuxième appareil exempt de panne électrique lors de la détection de la panne électrique du mesureur de puissance (10), et pour transmettre les informations relatives à la panne électrique du mesureur de puissance (10) au deuxième appareil à partir de l'au moins un deuxième dispositif de communication (32, 48).

2. Appareil électronique selon la revendication 1, dans lequel l'unité de commande (52) est configurée pour transmettre une demande de connexion à une pluralité d'appareils à connexion sans fil non établie, et déterminer si la pluralité d'appareils sont en panne électrique suivant un temps de réception d'une réponse à la demande de connexion retournée à partir de la pluralité d'appareils.

3. Appareil électronique selon la revendication 2, dans lequel l'unité de commande (52) est configurée pour recevoir une réponse dans une période donnée à partir de la transmission de la demande de connexion, et pour déterminer qu'un appareil de l'appareil à connexion sans fil non établie qui a transmis la réponse reçue est le deuxième appareil.

4. Appareil électronique selon la revendication 2, dans lequel à la réception d'une demande de connexion à partir d'un autre l'appareil à connexion sans fil non établie, l'unité de commande (52) est configurée pour retarder le retour d'une réponse pendant la panne électrique du mesureur de puissance (10).

5. Appareil électronique selon l'une quelconque des revendications 1 à 4, dans lequel l'unité de commande (52) est configurée pour recevoir des informations relatives à une panne électrique à partir d'une pluralité d'autres appareils par le deuxième dispositif de communication (32, 48), et
pour transmettre collectivement ou séquentiellement une pluralité d'éléments d'information relatifs à la panne électrique à partir de la pluralité d'autres appareils au deuxième appareil.

6. Appareil électronique selon la revendication 5, dans lequel l'unité de commande (52) est configurée pour recevoir une pluralité d'éléments d'information relatifs à une panne électrique à partir d'une pluralité d'autres appareils pour une certaine période par le deuxième dispositif de communication (32, 48).

7. Appareil électronique selon l'une quelconque des revendications 1 à 6, comprenant en outre d'autres mesureurs (11, 13) que le mesureur de puissance (10) et dans lequel
l'unité de commande (52) comprend une mémoire (53) configurée pour stocker les informations relatives à la panne électrique du mesureur de puissance (10), des données de mesure du mesureur de puissance (10), et des informations indiquant une heure de panne électrique, et des données de mesure d'autres mesureurs.

8. Appareil électronique selon la revendication 7, dans lequel le premier dispositif de communication (38) est configuré pour recevoir les données de mesure à partir du mesureur de puissance (10) par une antenne (40), et
l'unité de commande (52) est configurée pour stocker les données de mesure dans la mémoire et transmettre les données de mesure au premier appareil par l'au moins un deuxième dispositif de communication (32, 48), et
l'unité de commande (52) est configurée pour recevoir les informations relatives à la panne électrique à partir du premier appareil par l'au moins un deuxième dispositif de communication (32, 48) et transférer les informations reçues à un autre appareil par l'au moins un deuxième dispositif de communication (32, 48).

9. Appareil électronique selon l'une quelconque des revendications 1 à 8, dans lequel les informations relatives à la panne électrique du mesureur de puissance (10) comprennent une heure de panne électrique et des informations d'identification de l'appareil électronique.

10. Procédé pour commander un appareil électronique selon l'une quelconque des revendications 1 à 10, le procédé comprenant les étapes consistant à :
charger le condensateur (26, 28) lorsque l'appareil électronique est entraîné par la source d'alimentation secteur (6) ;
surveiller l'alimentation secteur fournie au premier dispositif de communication (38) pour détecter la panne électrique du mesureur de puissance (10) ;
transmettre des informations relatives à une panne électrique du mesureur de puissance (10) au premier appareil à partir du deuxième dispositif de communication (32, 48) lors de la détection de la panne électrique du mesureur de puissance (10) ; et
établir une connexion sans fil avec un deuxième appareil exempt de panne électrique du mesureur de puissance (10) lorsque la panne électrique est détectée, et transmettre les informations relatives à la panne électrique du mesureur de puissance (10) au deuxième appareil à partir de l'au moins un deuxième dispositif de communication (32, 48).
